# EUROPEAN PATENT APPLICATION

(11) **EP 1 139 218 A2**
(43) Date of publication of application: **04.10.2001**
(21) Application number: 01200689.6
(22) Date of filing: 22.02.2001
(51) Int. Cl.: G06F 9/45

(54) **Method of generating optimized code**

(30) Priority: 22.02.2000 US 510216
(71) Applicant: Texas Instruments Incorporated, Dallas, Texas 75251 (US)
(72) Inventor: Bartley, David H., Dallas, Texas 75243 (US); Fuqua, Paul C., Dallas, Texas 75218 (US); Ward, Alan S., Sugarland, Texas 77478 (US); Tatge, Reid E., Richmond, Texas 77469 (US)
(74) Representative: Holt, Michael

(57) **Abstract**

A profile optimized code is generated by analyzing profile data from sample runs of compiled code compiled at different optimizer options. The code is analyzed for both cycle time and code size for each function.

## Description

### FIELD OF INVENTION

This invention relates to a method for compiling code and more particularly, to using profile data generated from sample runs compiled with different compiler options to guide the set of options to be used for each function.

### BACKGROUND OF THE INVENTION

For some time, the technique of using the runtime performance of a program to guide optimizations has been discussed in the literature and occasionally implemented in production compilers. This technique is generally referred to as "profile-based optimization." The goal is to identify those paths through a program which are executed the most frequently, and to apply more aggressive optimization techniques to those critical sections of code to make them execute faster.

In an embedded environment, not only is speed important, but the size of the generated code is often a critical cost issue. Therefore, it is necessary to balance the concerns of speed versus space. Simply identifying the time-critical code and applying aggressive optimization to it is not enough. We must optimize part of the code to be fast, and part of the code to be small, while constraining the total program size so that it fits in the available target memory. The goal is to be able to optimize as much of the critical part of the program a possible without violating the size constraint.

It is a generally observed phenomenon that a large portion of the execution time of a program is generally spent in a small portion of the actual code. This is what makes profile-based optimization effective: it allows you to predict which parts of the code are critical, and to selectively apply more aggressive optimization.

So, if speed is important, why not just apply aggressive optimization everywhere? Generally, compilers have switches for "compile for speed" versus "compile for size," so this is certainly possible.

Compiling for speed on a Very Long Instruction Word (VLIW) architecture potentially leads to significant code size growth. Compiling for size on a VLIW results in significant speed degradation. If we simply compile everything for speed, the code may grow beyond what is available on the target memory. If we simply compile for space, the resulting performance is unacceptable.

Compiler optimization control flags generally work on a whole source module. The typical development scenario is to compile, run, and profile a program, then recompile modules based on the feedback provided by the profiler: compile some modules for speed, some for size.

### SUMMARY OF THE INVENTION

The present invention provides, a program that is compiled with two or more sets of compiler options, and profiles each resulting executable. The results of all the profiles are used as input to a program which will analyze the profile data, and given constraints will generate a solution which will be a list of each function in the application, and the set of compiler options to use for each function in order to satisfy the given constraints.

### DESCRIPTION OF THE DRAWINGS

The present invention will now be further described, by way of example, with reference to the embodiments illustrated in the figures of the accompanying drawings:

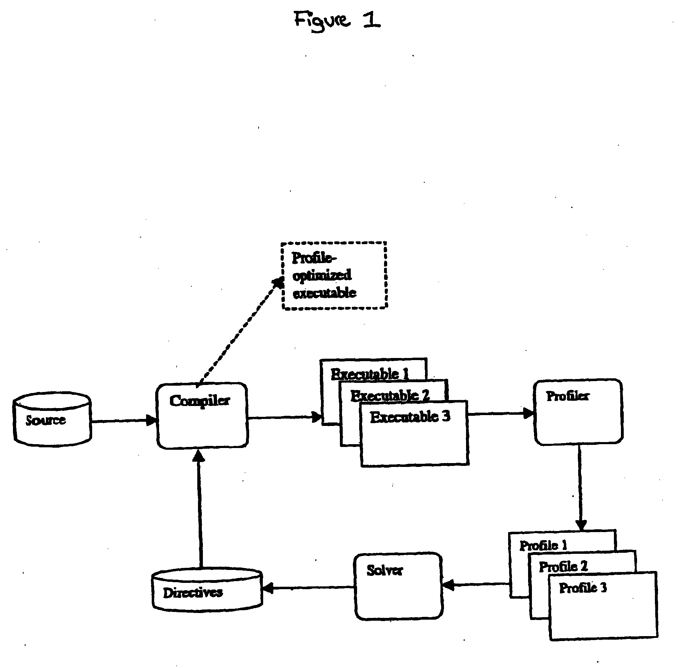

Fig. 1 illustrates compiling and profiling;
Fig. 2 illustrates sets and functions;
Fig. 3 illustrates a chart of speed (cycle) versus size (bytes);
Fig. 4 is a block diagram of a system according the present invention; and
Fig. 5 is a flow chart of the operation of an embodiment: of the present invention.

### DETAILED DESCRIPTION

A standard compiler takes code (such as C) and compiles it, generating object code. A compiler may be controlled with compiler options so it generates code which will, for example, run as fast as possible or may be controlled to generate code which is as small as possible. The goal of this invention is to automatically choose compiler options for each function in a program to optimally balance system constraints such as size and speed. This set of options is referred to as the "solution" for the program.

Step 1 in this process compiles the whole program several times, each time with a different set of options. The option sets are chosen by the user to optimize different performance metrics such as maximum speed and minimum size. The result of this step is a set of executable objects, one for each option set.

Step 2 is to execute each version of the program produced in step 1, producing profile information for each version. Each "profile" contains measured performance metrics for each function in the program (such as size, power consumed, and cycles consumed.)

As an example of profile data illustrated in the table below, a program consists of 3 functions F1, F2, and F3. When compiled with options set 1, the functions have the respective sizes of A1, A2, and A3, and the execution times of B1, B2, and B3. When compiled with options set 2, the 3 functions have respective sizes C1, C2, and C3, and respective execution times of D1, D2, and D3. The compilation of this program by the system will create two profile sets, corresponding to the two options sets (options 1 and options 2).

### Profile 1 consists of the following data:

- F1: size=A1 cycles=B1
- F2: size=A2 cycles=B2
- F3: size=A3 cycles=B3

### Profile 2 consists of the following data:

- F1: size=C1 cycles=D1
- F2: size=C2 cycles=D2
- F3: size=C3 cycles=D3

| | Options 1 | | Options 2 | |
|---|---|---|---|---|
| | Size | Cycles | size | Cycles |
| F1 | A1 | B1 | C1 | D1 |
| F2 | A2 | B2 | C2 | D2 |
| F3 | A3 | B3 | C3 | D3 |

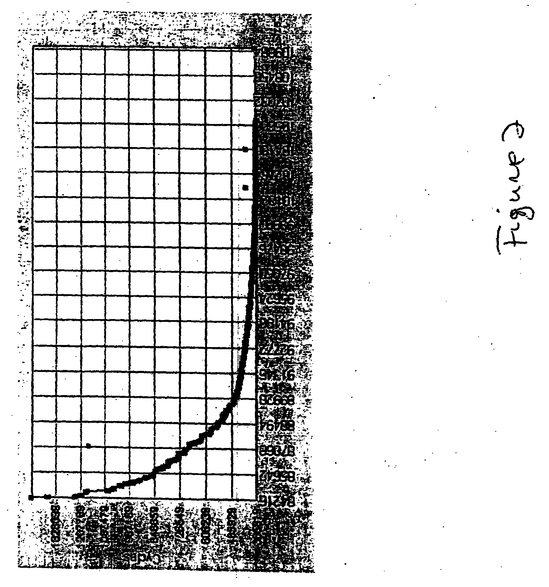

Step 3, which is the solver, uses linear programming heuristics to reduce the total number of permutations of option sets per function to an "efficient frontier" which is the set of potential solutions for which there are no other solutions that are better in all performance metrics, such as size and speed. When this "efficient frontier" is plotted on a graph with cycles being the vertical axis and bytes being the horizontal axis, the result is a concave curve which explicitly represents the candidate performance metric tradeoff (see figure 2). Each point on the curve represents one potential solution, which is the set of compiler options for each function in the program that can be used to generate an executable that exhibits that performance tradeoff.

Step 4 displays the "efficient frontier" curve graphically, and allows the user to select a solution point in one of two ways. Selection method 1 is for the user to browse the "efficient frontier" curve and simply select a point through a graphical user interface. Selection method 2 allows the user to specify a upper bound on any performance metric and the system will choose a solution that maximizes the other performance metrics. Either selection method will visualize the exact option sets chosen for each function and provide an interactive mechanism for overriding any functions options set. If an override is applied, the "efficient frontier" is recomputed by simply rerunning the solver (step 3). The compilation / execution / profiling steps need not be iterated.

Step 5 writes the selected solution to a persistent database containing directives to the compiler that control options to be applied individually to each function.

Step 6 compiles the program using the directives database created in step 5. This results in an executable that is then run and profiled to collect actual performance metrics. The resultant performance metrics are presented to the user and compared to the predicted performance metrics. If the solution is acceptable to the user, the solution is installed as the default build method for the program. Otherwise, the user iterates from step 4.

In step 7 the compiler uses the build method recorded from step 6 in any subsequent builds of the program or until the user chooses another build method either by rerunning the system or deleting the database.

### In more detail, step 3 is performed as follows:

The fundamental unit in the solver is the function record, which contains the time and size information for a single function in a single profile. Each profile is represented as a sequence of function records, one for each function. The solver operates on a matrix of function records, each row containing the records for one function, each column containing the records for one profile. To form a solution, the solver picks one function record from each row; choosing from different columns.

The process of forming the solution curve is essentially a search problem; it divides nicely into generating solution from the function matrix, and evaluating them to determine which are useful. We want to avoid brute-force generation, since the numbers are extremely large. The vast majority of these solutions will be useless. It's important both to reduce the number generated and to efficiently discard the useless ones.

We can reduce the space considerably by an initial filtering step. One way is to convert the function matrix into a two-column matrix where one column contains the fastest version of each function and the other contains the smallest, thus distilling the essential trade-off of time and size. This two-column matrix is most useful when considering the evaluation process as a 0-1 integer programming problem, but is less useful for producing the entire solution curve.

A second method is to remove from each row all function records that are themselves useless. In many instances, records will be identical (and the duplicates can be removed) or one or more will be clearly inferior (their time and size are both greater than the others). This filtering method mirrors the evaluation of solutions: only points on the lower contour of the speed/size plot are retained.

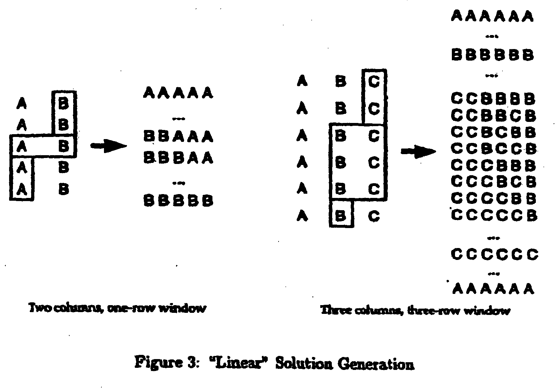

Following the initial filtering, solutions can be generated in several ways. The best heuristic for our purposes we call "linear approximation" (Figure 3). The linear solver sorts the rows of the filtered matrix and then moves a small window down the rows, only considering possibilities that involve choices within the window. In its simplest form, with two columns and a one-row window, the choices would be to take the function in column A or in the one in column B; after the choice, the choice is made on the next row, and so on. Rows above the window are left in column B, rows below it in column A. It is linear because the number of solutions generated is directly proportional to the number of rows in the matrix.

In actual use, the window is eight rows so we have 256 choices at each step; there may be more than two columns so we use each pair of columns in turn; and there are two or more sort functions so we make that many passes over the entire matrix. All these details serve to generate permutations that are likely to be useful, without generating all of them. The permutations -- the solutions -- are filtered to collect a list of useful solutions, which in practice is very nearly the same as the list formed by an exhaustive approach.

The filtering process, both the initial filter and the solution filter, uses a binary search tree. We attempt to insert each candidate function or solution into the tree, the sorted nature of the tree allows efficient determination of whether or not the candidate should be included, and when entries already present should be removed. At the end of the process, the tree contains all the useful entries and the others have been discarded.

Each node bears a time and a size; as a candidate solution (or function) is inserted, its time and size are compared against the node's. If the candidate's time and size are both bigger than the node's, the candidate is inferior and is discarded. If the candidate's time and size are both smaller than the node's, the node is the inferior one, and it is removed from the tree as insertion is tried again with the candidate. In the other cases, we move to the left or right in the tree to continue the search. If we come to the end of a branch and haven't discarded the candidate, we attach a new node bearing the candidate's values as a useful entry. Typically the candidate is compared against no more than log₂ (useful entries), with useless candidates discarded early.

A method for compiling an application program in an optimum manner, comprising, compiling said application with a different set of compiler options to provide two or more executables, generating profile information from said executables, and selecting compiler options for said application program based upon said profile information.

The set of computer options may be selected from speed, code size, and power.

## Claims

1. A method for compiling an application program in an optimum manner, comprising:
compiling said application program with a first set of compiler options to provide a first executable,
compiling said application program with a second set of compiler options to provide a second executable,
generating profile information from said first and second executables, and
selecting compiler options for each function of said application program so as to optimize said application program as a function of desired profile information.

2. The method of claim 1, wherein said step of compiling said application program comprises compiling said application program with a first set of options for speed.

3. The method of claim 2, wherein said step of compiling said application program comprises compiling said application program with a second set of options for code size.

4. The method of claim 2, further comprising:
analyzing said profile information against user supplied constraints for selecting said compiler options by function.

5. A solution space generator, comprising:
means for reading profiler information, and
means for generating useful solutions of a solution set derived from profiler information.

6. The generation of claim 5, further comprising:
means for providing a display of said useful solutions.

7. The generation of claim 6, further comprising:
means for selecting one of said solutions and using said solution for subsequent compile of an application program.
